# EUROPÄISCHE PATENTANMELDUNG

(11) **EP 4 830 835 A1**
(43) Veröffentlichungstag der Anmeldung: **28.10.2026**
(21) Anmeldenummer: 25171913.4
(22) Anmeldetag: 23.04.2025
(51) Int. Cl.: B01J 37/02, B01J 8/10, B01J 2/10

(54) **VORRICHTUNG UND VERFAHREN ZUR HERSTELLUNG KOMPAKTIERTER, NANOPARTIKELBELADENER FORMKÖRPER**

(71) Anmelder: Forschungszentrum Jülich GmbH, 52425 Jülich (DE)
(72) Erfinder: Häusler, Johannes, 85368 Moosburg an der Isar (DE); Meißner, Jan, 52441 Linnich (DE); Pasel, Joachim, 52428 Jülich (DE); Peters, Ralf, 52146 Würselen (DE)
(74) Vertreter: Michalski Hüttermann & Partner mbB

(57) **Zusammenfassung**

Die vorliegende Erfindung betrifft eine Vorrichtung zur Herstellung kompaktierter, nanopartikelbeladener Formkörper aus einem partikulären Schüttgut, mindestens umfassend:
a) ein zylindrisch ausgestaltetes Reaktorgehäuse mit einem Schüttgut-Einlass und einem Formkörper-Auslass;
b) einen am Schüttgut-Einlass innerhalb des Reaktorgehäuses angeordneten Mischbereich umfassend eine sich axial erstreckende Umwälzvorrichtung;
c) mindestens einen Trägergas-Einlass und einen Trägergas-Auslass, wobei der Trägergas-Einlass in der rotierbaren Welle der Umwälzvorrichtung angeordnet ist;
d) einen innerhalb des Reaktorgehäuses und am Formkörper-Auslass angeordneten Kompaktierungsbereich; und
e) mindestens einen Formkörper-Auslass.

Des Weiteren umfasst die vorliegende Erfindung ein Verfahren zur Herstellung nanopartikelbeladener Formkörper sowie die Verwendung des Verfahrens zur Herstellung von mit Nanopartikeln beladener Formkörper.

## Beschreibung

Die vorliegende Erfindung betrifft eine Vorrichtung zur Herstellung kompaktierter, nanopartikelbeladener Formkörper aus einem partikulären Schüttgut, mindestens umfassend:
a) ein zylindrisch ausgestaltetes Reaktorgehäuse mit einem Schüttgut-Einlass und einem Formkörper-Auslass;
b) einen am Schüttgut-Einlass innerhalb des Reaktorgehäuses angeordneten Mischbereich umfassend eine sich axial erstreckende Umwälzvorrichtung;
c) mindestens einen Trägergas-Einlass und einen Trägergas-Auslass, wobei der Trägergas-Einlass in der rotierbaren Welle der Umwälzvorrichtung angeordnet ist;
d) einen innerhalb des Reaktorgehäuses und am Formkörper-Auslass angeordneten Kompaktierungsbereich; und
e) mindestens einen Formkörper-Auslass. Des Weiteren umfasst die vorliegende Erfindung ein Verfahren zur Herstellung nanopartikelbeladener Formkörper sowie die Verwendung des Verfahrens zur Herstellung von mit Nanopartikeln beladener Formkörper.

Die effiziente Funktionalisierung von Partikeln durch eine zusätzliche Ausrüstung der Partikeloberfläche mit weiteren Substanzen ist in der technischen Umsetzung nicht trivial. Dies ergibt sich insbesondere in den Fällen, in denen ein signifikanter Größenunterschied im Bereich mehrerer Zehnerpotenzen zwischen den Partikeln und der zusätzlichen Funktionalisierung besteht und eine homogene und dauerhafte Anhaftung, ohne chemische Mittel, auf rein physikalischem Wege erreicht werden muss. Eine derartige Situation ergibt sich insbesondere für eine Abscheidung von Nanopartikeln auf Partikeln mit einer durchschnittlichen Größe im unteren Millimeter- oder Submillimeterbereich. Diese Substanzen können in vielen Bereichen der Forschung und Industrie eingesetzt werden und gelten als besonders herausfordernd, da Verfahren und Vorrichtungen gefunden werden müssen, welche sowohl eine homogene Aufbringung der Nanopartikel als auch eine Konservierung des erreichten Beschichtungsergebnisses über den gesamten Prozess, ohne Zerstörung der einmal erhaltenen Abscheidung, ermöglichen. Für eine wirtschaftliche Herstellung, beispielsweise geträgerter Katalysatoren, ist dabei sowohl eine homogene, schnelle wie auch steuerbare Beladung wichtig. Unter der Randbedingung der schnellen Herstellung kann man versuchen, diese Beladung beispielsweise durch eine Abscheidung aktiver Substanzen aus einem Trägergas auf die Partikeloberfläche zu erreichen. Dazu kann das Trägergas eine hohe Beladung mit festen oder flüssigen Nanopartikeln aufweisen. Nachteiligerweise kann eine hohe Beladung des Trägergases zu einer ungleichmäßigen Beladung der Partikeloberflächen insgesamt, zu ungewollten Verlusten durch nicht abgelagerte und im Trägergas verbleibende Nanopartikel und zu einem beschleunigten, unerwünschten Partikelwachstum der Nanopartikel vor der Ablagerung führen. Diese Faktoren resultieren unnötigerweise in einer deutlichen Verteuerung der Herstellung. Noch komplizierter wird die Situation in den Fällen, in denen die Partikel für eine verbesserte Endnutzung in leichter handhabbare, größere Einheiten überführt werden sollen. So sind beispielsweise Verfahren bekannt, welche kleinere Partikel zu größeren Formköpern kompaktieren. Diese Verfahren sind aber in der Regel nur unzureichend geeignet, oberflächlich durch Nanopartikel funktionalisierte Partikel sicher, reproduzierbar und unter Erhalt der zusätzlichen funktionalen Eigenschaften, in größere Partikelaggregate umzuwandeln. Dies kann beispielsweise durch eine ungeeignete, mechanische Belastung der beladenen Partikel hervorgerufen werden. Weiterhin basieren diese bekannten Verfahren auf eigenständigen Prozessumgebungen für den Kompaktierungsschritt. Diese Trennung der Reaktionsräume, zur oberflächlichen Beladung und Kompaktierung, verteuert die Aufbauten, führt zu einer erhöhten, ungewollten Abscheidung der Nanopartikel auf eine größere Apparateoberfläche und erfordert ein umständliches Handling zum sicheren Transfer der beladenen Partikel. Insofern besteht Bedarf an einfachen Aufbauten und Verfahren, welche eine reproduzierbare und effiziente Abscheidung sowie eine reproduzierbare, schonende und materialsparende Kompaktierung erlauben.

Auch in der Patentliteratur finden sich die unterschiedlichsten Ansätze zur Beladung von Partikeln.

So beschreibt beispielsweise die EP 0 453 674 B1 ein Verfahren zur Herstellung von Katalysatoren, bei dem eine katalytisch wirksame Menge Kobalt als Schicht auf der peripheren Außenoberfläche eines teilchenförmigen, porösen anorganischen Oxidträgers verteilt wird, um einen Katalysator zu bilden, der für die Umwandlung von Synthesegas zu Kohlenwasserstoffen brauchbar ist, und die Trägerteilchen mit einem Spray in Kontakt gebracht werden, das eine zersetzbare Verbindung aus dem Metall oder Metallen enthält, wobei das Verfahren die Aufrechterhaltung eines Bettes der Trägerteilchen in aufgewirbeltem Zustand bei einer Temperatur im Bereich von etwa 50°C bis etwa 100°C durch Kontakt mit einem Gas bei einer Temperatur im Bereich von etwa 50°C bis etwa 100°C; die Besprühung des Bettes aus den erhitzten Trägerteilchen mit einer Flüssigkeit umfasst, in der eine Verbindung oder Verbindungen von Kobalt dispergiert ist/sind, mit einer Fließrate, die zur Lieferung eines Verhältnisses der Fließrate der Flüssigkeit : Fließrate des aufwirbelnden Gases unter etwa 0,6 g Flüssigkeit/Fuß³ (0,6 g/28,32 1) aufwirbelndes Gas ausreicht, um auf den Teilchen eine Oberflächenschicht aus dem Metall mit einer durchschnittlichen Dicke im Bereich von etwa 20 Mikron (20 µm) bis etwa 250 Mikron (250 µm) zu bilden, wobei die als metallisches Metall pro gepacktes Schüttvolumen des Katalysators berechnete Beladung aus dem Metall im Bereich von etwa 0,01 g/cm³ bis etwa 0,15 g/cm³ liegt.

In der EP2045011B1 ist ein Verfahren zur Herstellung eines Abgasreinigungskatalysators beschrieben. Das Verfahren umfasst: (a) Bereitstellen einer kolloidalen Lösung, die ein kolloidales Teilchen aus Seltenerdhydroxid oder -oxid enthält, (b) Zugeben eines Zirkondioxid basierenden Metalloxidteilchens zu der kolloidalen Lösung, um zu verursachen, dass das kolloidale Teilchen auf die Oberfläche des Zirkondioxid basierenden Metalloxidteilchens adsorbiert und geladen wird, (c) Trocknen und Brennen des Zirkondioxid basierenden Metalloxidteilchens mit dem darauf adsorbierten und geladenen kolloidalen Teilchen, um ein Katalysatorträgerteilchen zu erhalten, und (d) Laden von Rhodium auf das Katalysatorträgerteilchen.

Derartige aus dem Stand der Technik bekannte Lösungen können noch weiteres Verbesserungspotential bieten. Dies bezieht sich insbesondere auf die Bereitstellung einer Vorrichtung und eines Verfahrens, mit denen chemisch und physikalisch sehr homogene und genau definierte Partikel sehr gleichmäßig und schnell aus einem Gasstrom mit Nanopartikeln beladen und in einem Schritt zu größeren Einheiten aggregiert werden können.

Es ist daher die Aufgabe der vorliegenden Erfindung, die aus dem Stand der Technik bekannten Nachteile zumindest teilweise zu überwinden. Es ist insbesondere die Aufgabe der vorliegenden Erfindung eine Vorrichtung bereitzustellen, welche eine gleichmäßige und schnelle Beladung von Partikeloberflächen mit nanopartikulären Substanzen aus einem Gasstrom sowie deren mechanische Aggregation oder Verdichtung zu aus mehreren Partikeln bestehenden, grö-βeren Formkörpern ermöglicht. Des Weiteren ist es die Aufgabe der vorliegenden Erfindung ein Verfahren zur nanopartikulären Gasphasenbeladung von Partikeln und deren mechanische Kompaktierung zu größeren Formkörpern bereitzustellen.

Erfindungsgemäß ist dementsprechend eine Vorrichtung zur Herstellung kompaktierter, nanopartikelbeladener Formkörper aus einem partikulären Schüttgut, wobei die Vorrichtung mindestens umfasst:
a) ein zylindrisch ausgestaltetes Reaktorgehäuse mit einem Schüttgut-Einlass und einem Formkörper-Auslass, wobei der Schüttgut-Einlass und der Formkörper-Auslass jeweils im Bereich der unterschiedlichen axialen Enden des Reaktorgehäuses angeordnet sind;
b) einen am Schüttgut-Einlass innerhalb des Reaktorgehäuses angeordneten Mischbereich umfassend eine sich axial erstreckende Umwälzvorrichtung, wobei die Umwälzvorrichtung eine rotierbare Welle und ein oder mehrere in unterschiedlichen Höhen an der Welle angeordnete und sich radial von dieser aus erstreckende Mischblätter aufweist;
c) mindestens einen Trägergas-Einlass und einen Trägergas-Auslass, wobei der Trägergas-Einlass in der rotierbaren Welle der Umwälzvorrichtung angeordnet ist;
d) einen innerhalb des Reaktorgehäuses und am Formkörper-Auslass angeordneten Kompaktierungsbereich, wobei der Kompaktierungsbereich eine Kompaktierungsvorrichtung zur Verdichtung des partikulären Schüttgutes aufweist;
e) mindestens einen Formkörper-Auslass.

Überraschend wurde gefunden, dass sich mittels der oben angegebenen Vorrichtung sehr effizient und kostengünstig Formkörper aus nanopartikelbeladenen, partikulären Schüttgütern herstellen lassen. Die partikulären Schüttgüter werden innerhalb einer Reaktionsumgebung sehr effizient durch ein beladenes Trägergas mit Nanopartikeln an der Oberfläche ausgerüstet und das funktionalisierte Schüttgut in derselben Reaktionsumgebung in mechanisch stabile, funktionalisierte Formkörper umgewandelt. Die Formkörper bestehen also durchgehend aus einem oberflächlich funktionalisierten Schüttgut und stellen somit die Nanopartikel-Funktionalisierung im Inneren wie auch auf der Oberfläche der Formkörper bereit. Somit wird in den Fällen, in denen das gesamte Volumen der Formkörper zugänglich ist, beispielsweise durch eine poröse Struktur, eine große funktionalisierte Formkörperoberfläche bereitgestellt. Diese funktionalisierte Oberfläche ist verglichen mit einer ausschließlichen Beschichtung einer äußeren Formkörperoberfläche deutlich größer. Insofern können Formkörper mit einer deutlich effizienteren, beispielsweise katalytisch aktiven, inneren und äußeren Oberfläche bereitgestellt werden. Neben der Bereitstellung im gesamten Volumen homogen funktionalisierter Formkörper zeichnet sich die Vorrichtung durch einen verbesserten Edukteinsatz aus. Durch die Integration der mechanischen Kompaktierung in die Reaktionsumgebung der Beladung wird das Trägergas länger mit dem Schüttgut und dem teils- sowie vollständig kompaktiertem Schüttgut kontaktiert und es werden weiterhin Nanopartikel abgeschieden. Es entfällt zudem ein umständlicher Transfer des beladenen Schüttgutes in eine neue Reaktionsumgebung, welches je nach Art des Schüttgutes unter einem besonderen Schutz stattfinden muss. Zudem verringert sich durch die Integration der Kompaktierungseinheit in die Beladungsumgebung die Oberfläche der Reaktionsumgebung, welches mit einem geringeren Verlust an Nanopartikeln durch eine ungewollte Abscheidung auf die Oberfläche der Reaktionsumgebung einhergeht. Es lassen sich mit der Vorrichtung also auch sehr teure Nanopartikel prozessieren.

Die erfindungsgemäße Vorrichtung ist Vorrichtung zur Herstellung kompaktierter, nanopartikelbeladener Formkörper aus einem partikulären Schüttgut. Die Vorrichtung erlaubt eine zweistufige Funktionalisierung eines partikulären Schüttgutes. Zuerst werden durch Ablagerung von Feststoffen oder Flüssigkeiten mit einer Größe kleiner als 1 µm aus einer Gasphase auf die Oberfläche eines größeren Partikels einer Schüttung durch Nanopartikelablagerung funktionalisierte Partikeloberflächen erhalten. Die funktionalisierenden Nanopartikel werden den Partikeln dabei in einer Gasphase, als Rauch oder Nebel, suspendiert oder dispergiert zugeführt. Beispielsweise kann es sich um Flüssigkeitstropfen oder Feststoffnanopartikel handeln, welche im Gasstrom eine mittlere Größe von beispielsweise 50 nm aufweisen. Die Größe der Nanopartikel im Trägergas kann beispielsweise über Lichtstreuung bestimmt werden. Die Nanopartikel können dem Partikel weitere chemische Funktionalitäten oder Eigenschaften verleihen. So können über die Ablagerung der weiteren nanopartikulären Substanz auf die Oberfläche der Partikel zusätzliche katalytische Eigenschaften bereitgestellt werden. Die Partikel können, alternativ oder zusätzlich, auch anti-mikrobiell oder mit weiteren chemisch aktiven Zentren oder generell mit weiteren nanopartikulär vorliegenden Substanzen, wie beispielsweise mit Nährstoffen, ausgerüstet werden. Durch die Möglichkeit zum Einsatz in einer Vielzahl unterschiedlicher Umsetzungen können sehr verschiedene Substanzen als abzuscheidende Nanopartikel eingesetzt werden. Mögliche Nanopartikel sind beispielsweise Metalle wie Nickel, Platin, Kupfer, Iridium, Palladium, Eisen, Cer, etc. oder halbleitende Materialien wie Silizium, Germanium, Indium-Zinn-Oxid (ITO) etc.. Die Nanopartikel können beispielsweise ligandenfrei mittels Funkenentladungsablation hergestellt werden. Die Nanopartikel können auch in einer flüssigen Phase dispergiert im Trägergasstrom vorliegen. Möglich sind beispielsweise lösliche Komplexverbindungen der oben genannten Metalle, wie Hexachloroplatinsäure oder deren Salze, Nickelnitrat und seine Hydrate, die chlor-, sulfat- oder nitrathaltigen Verbindungen der Metalle. Das Mengenverhältnis zwischen nanopartikulären Katalysatorvorläufer und Trägergas kann variabel innerhalb weiter Bereiche festgelegt werden. Beispielsweise kann die Beladung eines Liters an Trägergas unter Normbedingen mit 5 mg an nanopartikulären Katalysatorvorläufer erfolgen. Möglich sind Beladungen im Bereich von größer oder gleich 0,001 mg und kleiner oder gleich 1000 mg. Bevorzugt können mittels der erfindungsgemäßen Vorrichtungen hohe Trägergasbeladungen verarbeitet werden. Als Trägergas können beispielsweise inerte Gase wie Stickstoff, die Edelgase oder aber auch Kohlendioxid eingesetzt werden. Zur Vereinfachung der Handhabung des funktionalisierten Schüttgutes wird dieses Schüttgut in einem zweiten Schritt mechanisch so aufbereitet, dass einzelne, funktionalisierte Schüttgutpartikel zu größeren Aggregaten aus einer Vielzahl einzelner Partikel in Form mechanisch stabiler, kompakter Formkörper bereitgestellt werden. Die Formkörper werden also mittels mechanischer Kräfte aus den Schüttgutpartikeln erzeugt und können beispielsweise ein bevorzugt 10faches, weiter bevorzugt 100faches und weiterhin bevorzugt 1000faches Volumen in Bezug auf ein durchschnittliches Volumen eines Schüttgutpartikels aufweisen. Die Formkörper können in ihrer äußeren Form symmetrisch ausgestaltet sein. So kann ein Formkörper beispielsweise sphärisch, zylindrisch, kubisch oder aber auch irregulär geformt vorliegen. Bevorzugt wird die Kompaktierung derart gesteuert, dass der Formkörper porös vorliegt. Insofern wird im Rahmen des Kompaktierungsschritt kein dichter Formkörper hergestellt, es liegen im Inneren des Formkörpers gas- oder luftgefüllte, partikelfreie Bereiche vor.

Die Nanopartikel werden aus einem beladenen Trägergasstrom auf ein partikuläres Schüttgut abgeschieden. Der Nanopartikel wird aus dem Trägergas auf die Oberfläche eines Partikels abgeschieden, wobei mindestens ein Teil oder der ganze Nanopartikel auf der Partikeloberfläche verbleibt. Es ist auch möglich, dass der Nanopartikel zum Teil oder ganz in den Partikel eindiffundiert. Letzteres kann insbesondere dann der Fall sein, wenn flüssige Nanopartikel verwendet wird, welche beispielsweise auf poröse Partikel aufgebracht werden. Die Partikel stellen das mechanisch stabile Grundgerüst und die Oberfläche bereit, auf welcher die Nanopartikel abgeschieden werden. In der erfindungsgemäßen Vorrichtung wird der Partikel so ausgerüstet, dass ein chemisch funktionalisierter Partikel entsteht. Dies wird durch die Ablagerung der Nanopartikel auf der Oberfläche und ggf. noch teilweise in einen inneren Bereich der Partikel erreicht. Die Partikel können eine regelmäßige, beispielsweise eine runde, ellipsoide, oder zylindrische Gestalt aufweisen. Es ist aber auch möglich, dass die Partikel unregelmäßig geformt sind. Die Partikel können eine einzige Größe oder eine Größenverteilung aufweisen. Bevorzugt können Partikel mit einer Größe oder anzahlgemittelten, mittleren Größe im Bereich von 1 µm bis zu 10 cm eingesetzt werden. Weiter bevorzugt kann die anzahlgemittelte, mittlere Partikelgröße von 1 µm bis zu 1 cm betragen. Es liegen also mehrere Zehnerpotenzen an Größenunterschied zwischen den abzuscheidenden Nanopartikeln und den partikulären Trägern. Als geeignete Partikel kommen beispielsweise Kohlenstoffpulver mit großer spezifischer Oberfläche, (Aktivkohle pulverförmig oder pelletiert), oxidische anorganische Materialien, wie z.B. Al₂O₃ in seinen unterschiedlichen Modifikationen (alpha, beta, gamma Al₂O₃), Siliziumdioxid, Ceroxid, Titandioxid, sowie Mischoxide wie Steatit, Bentonit, Montmorillonit in Frage. Die Partikel bilden in den Fällen ein Schüttgut, in denen eine Mehrzahl an Partikeln in einem Haufen vorliegen, wobei die Ortsbeziehungen der einzelnen Partikellagen im Haufen zueinander während der Abscheidung variabel ist und sich die Partikel prinzipiell unabhängig voneinander bewegen können. Ohne äußere mechanische Einwirkungen kann die Beweglichkeit der einzelnen Partikel im Wesentlichen durch die Form und die Wechselwirkung der einzelnen Partikel zueinander bestimmt sein.

Die Vorrichtung umfasst a) ein zylindrisch ausgestaltetes Reaktorgehäuse mit einem Schüttgut-Einlass und einem Formkörper-Auslass, wobei der Schüttgut-Einlass und der Formkörper-Auslass jeweils im Bereich der unterschiedlichen axialen Enden des Reaktorgehäuses angeordnet sind. Die Beladung einer Partikelschüttung bestehend aus einer Mehrzahl einzelner Partikel mit oberflächlich abzulagernden Nanopartikeln erfolgt innerhalb eines Reaktors. Das innere Reaktorvolumen wird über ein Reaktorgehäuse definiert, welches beispielsweise durch einen Boden, einen Deckel und eine, den Boden mit dem Deckel verbindende Reaktorwand begrenzt ist. Das Reaktorinnere weist zumindest abschnittweise die Form einer Röhre auf, wobei der Reaktorboden und Reaktordeckel sich an jeweils entgegengesetzten Enden des Reaktors befinden. Somit kann beispielsweise der Schüttgut-Einlass in der Nähe des Reaktorbodens und der Formkörper-Auslass in der Nähe des Reaktordeckels angeordnet sein. Der Schüttgut-Einlass kann im Reaktorboden selbst oder aber in der Reaktorwand in der Nähe des Reaktorbodens angeordnet sein. Der Formkörper-Auslass kann im Reaktordeckel selbst oder aber in der Reaktorwand in der Nähe des Reaktordeckels angeordnet sein. Eine Anordnung der jeweiligen funktionalen Bestandteile im Bereich des Deckels oder des Bodens ergibt sich, wenn diese Teile, bezogen auf die gesamte axiale Ausdehnung des Reaktors, maximal 20% von diesen Teilen entfernt angeordnet sind. Der Reaktordeckel oder der Formkörper-Auslass oder der Schüttgut-Einlass oder der Reaktorboden können lösbar mit der Reaktorwand verbindbar ausgestaltet sein. Es ist aber auch möglich, dass der Deckel fest und der Reaktorboden lösbar mit der Reaktorwand verbunden ist. Die Schüttung gelang über den Einlass in den Reaktor, wird in diesem durch das Trägergas umspült und mit Nanopartikeln beladen, wird verfestigt und verlässt als Formkörper den Reaktor durch den Formkörper-Auslass. Das Reaktorgehäuse kann beispielsweise aus Glas, einem Kunststoff oder Metall gefertigt sein. Im Gehäuse können eine Heizung, eine Kühlung oder weitere Mittel oder Sensoren zur Konditionierung oder Überwachung des Reaktorinneren integriert sein. Die Höhe des Reaktors ergibt sich durch den Abstand von Reaktorboden zum tiefst liegenden Teil des Reaktordeckels. Die Breite des Reaktors ergibt sich als der Abstand zwischen den Innenwänden des Behälters. Im Falle eines variierenden Realtor-Innendurchmessers ergibt sich dieser als volumengewichteter Mittelwert der unterschiedlichen Durchmesser. Bevorzugt kann ein Verhältnis aus der Höhe und Breite des Reaktors, berechnet nach Höhe des Reaktors dividiert durch die Breite des Reaktors, größer oder gleich 1 und kleiner oder gleich 20 betragen. Die Höhe steht als bevorzugt in einem bestimmten Verhältnis zur Breite, wobei das Verhältnis angibt, dass der Reaktor höher als breiter ist. Das Verhältnis kann weiter bevorzugt größer oder gleich 2 und kleiner oder gleich 17 und weiter bevorzugt größer oder gleich 5 und kleiner oder gleich 15 betragen. Innerhalb dieser Grenzen kann die Beladungseffizienz im Vergleich zu kürzeren Innenräumen erhöht sein.

Die Vorrichtung umfasst b) einen am Schüttgut-Einlass innerhalb des Reaktorgehäuses angeordneten Mischbereich umfassend eine sich axial erstreckende Umwälzvorrichtung, wobei die Umwälzvorrichtung eine rotierbare Welle und ein oder mehrere in unterschiedlichen Höhen an der Welle angeordnete und sich radial von dieser aus erstreckende Mischblätter aufweist. Der Innenbereich des Reaktors lässt sich in mehrere Zonen einteilen. Ausgehend vom Reaktorboden liegt der erste funktionale Bereich, in welchem das eingebrachte Schüttgut gemischt oder umgewälzt wird. Das Mischen beinhaltet dabei sowohl eine axiale wie radiale Bewegungskomponente der Partikel. Dazu umfasst die Umwälzvorrichtung eine rotierbare Welle, welche sich axial durch das Reaktorgehäuse erstreckt. Die Welle ist im Gehäuse nicht starr angeordnet, sondern kann in eine oder in zwei Richtungen rotieren. Die Welle kann in der Grundform als ein Stab ausgeformt sein. Zur Erzeugung einer Partikelkonvektion innerhalb des Reaktorgehäuses weist die Umwälzvorrichtung an unterschiedlichen Höhenpositionen an der Welle Mischblätter auf. Es können ein, zwei, drei oder mehr Mischblätter an der Welle angeordnet sein. Die Mischblätter weisen dabei eine Geometrie auf, welche in der Lage ist, ein mit diesen Vorrichtungen bewegtes Schüttgut sowohl in einer Ebene, radial, als auch entlang der Welle, axial, innerhalb des Reaktorgehäuses zu bewegen. Der Transport der Partikel umfasst dabei während der Beladung sowohl eine translatorische wie auch rotatorische Bewegungskomponente. Dazu können die Mischblätter flächig, beispielsweise schaufelförmig, oder in einer 3-dimensionalen Form ausgestaltet sein. An einer axialen Höhenposition der Welle können eine oder mehrere, sich voneinander unabhängig bewegende Mischblätter angeordnet sein. Bevorzugt kann über die Anordnung der Mischblätter in der Schüttung eine Konvektion der Partikel erzeugt werden.

Die Vorrichtung umfasst c) mindestens einen Trägergas-Einlass und einen Trägergas-Auslass, wobei der Trägergas-Einlass in der rotierbaren Welle der Umwälzvorrichtung angeordnet ist. Die Beladung der Partikelschüttung zur weiteren Funktionalisierung mit Nanopartikeln erfolgt über die Kontaktierung der Partikel mit einem Trägergas, wobei das Trägergas die zur Abscheidung vorgesehenen Nanopartikel umfasst. Das Trägergas mit den Nanopartikeln wird über die Welle in das Innere des Reaktors geleitet. Dazu kann die Welle als Hohlwelle ausgestaltet sein. Die Welle kann dabei ein oder mehrere Düsenöffnungen aufweisen, durch welche das Trägergas in das Innere des Reaktors und somit in die Partikelschüttung geleitet wird. Die Öffnungen in der Welle können radial um einen spezifischen Teil der Welle herum angeordnet sein oder sich sowohl radial wie auch axial über einen Teil der Welle erstrecken. Bevorzugt ist der Trägergas-Einlass im unteren Drittel des Reaktorgehäuses, in Richtung Reaktorboden, angeordnet. Die Düsenöffnungen in der Welle können sich durch Löcher in der Welle ergeben. Es ist aber auch möglich, dass Teile der Welle für das nanopartikelbeladene Trägergas porös und diffusionsoffen ausgestaltet sind. Nach dem Austritt aus der Welle durch den Trägergas-Einlass und dem Abscheiden der Nanopartikel auf die bewegte Schüttung kann das entreicherte Trägergas den Reaktor über den Trägergas-Auslass verlassen. Diese Anordnung des Ein- und Auslasses kann zu einer besonders homogenen und steuerbaren Versorgung der Schüttung mit Trägergas beitragen.

Die Vorrichtung umfasst d) einen innerhalb des Reaktorgehäuses und am Formkörper-Auslass angeordneten Kompaktierungsbereich, wobei der Kompaktierungsbereich eine Kompaktierungsvorrichtung zur Verdichtung des partikulären Schüttgutes aufweist. Zur Umwandlung der mit Nanopartikeln beladenen Partikelschüttung in ein oder mehrere Formkörper wird die Schüttung in einem weiteren, an den Mischbereich in axialer Richtung anschließenden Kompaktierungsbereich, mechanisch verdichtet. Dies kann beispielsweise durch eine Verengung des Reaktorinnenquerschnitts unter gleichzeitiger mechanischer Kompression der Partikelschüttung durch die Kompaktierungsvorrichtung erfolgen. Dieser Kompaktierungsbereich liegt bevorzugt im oberen, zum Reaktordeckel hin angrenzenden Reaktorbereich. Der mechanische Aufbau und die Funktion der Kompaktierungsvorrichtung im Reaktor unterscheiden sich von den Eigenschaften der Umwälzvorrichtung. Bevorzugt kann in diesen Bereich die Dichte der Partikelschüttung um einen Faktor von größer oder gleich 1,1 bis kleiner oder gleich 5 erhöht werden.

Durch die Erhöhung der Dichte der Schüttung werden größere Adhäsionskräfte zwischen den Oberflächen einzelnen Partikeln induziert, welches zur Ausbildung größerer, mechanisch zusammenhängender Aggregate führt. Geeignete Kompaktierungsvorrichtungen können beispielsweise aus der Gruppe bestehend aus Walzenkompaktierungseinheiten, Pellet-Extruder mit Matrizenpresse, konisch zulaufende Förderschnecke mit fließender angepasster Steigung oder Kombinationen mindestens zweier Mitglieder aus dieser Liste aus ausgesucht sein.

Die Vorrichtung umfasst e) mindestens einen Formkörper-Auslass. Nach der mechanischen Verdichtung der Partikelschüttung, unter Ausbildung größerer und zusammenhängender und kompakter Schüttgut-Aggregate, wird das verdichtete Schüttgut am Formkörper-Auslass aus dem Reaktor ausgeschleust. Als Funktion der geometrischen Ausgestaltung des einen oder einer Mehrzahl an Auslässen, können unterschiedliche Formkörper-Querschnitte generiert werden. So kann der Formkörper-Auslass beispielsweise eine runde oder eine quadratische Querschnittsgeometrie aufweisen. Durch den Austrag des verdichteten Schüttgutes durch diesen Auslass werden dann entsprechen zylindrische oder rechteckige Formkörper ausgebildet. Durch die Wahl der Größe des Auslasses kann die Querschnittsfläche des Formkörpers und damit ein wesentlicher Faktor für das Formkörpervolumen vorgegeben werden.

In einer weiter bevorzugten Ausgestaltung der Vorrichtung kann der Trägergas-Auslass im Formkörper-Auslass integriert sein und die Vorrichtung keinen weiteren Trägergas-Auslass aufweisen. Zur effizienten Ausnutzung des Trägergases hat es sich als besonders vorteilhaft herausgestellt, dass das von Nanopartikeln abgereicherte Trägergas den Reaktor über den Formkörper-Auslass verlässt. Diese Ausgestaltung hat den Vorteil, dass die Nanopartikel möglichst vollständig aus dem Trägergas entfernt werden können. Dies wird dadurch erreicht, dass die Kontaktzeit des Trägergases mit der Schüttung maximal verlängert wird. Neben der effizienten Nutzung des Trägergases ergibt sich zudem eine möglichst einfach aufgebaute Vorrichtung. Der Reaktor weist im Wesentlichen also nur 2 Zuführungen, einmal für die Schüttung und einmal für das Trägergas, sowie einen gemeinsamen Auslass für die Formkörper und das abgereicherte Trägergas, auf. Diese Führung des Trägergases kann zudem dazu beitragen, dass eine verbesserte und gleichmäßigere Kompaktierung das Formkörpers erreicht wird, da der Trägergasstrom und die Kompaktierungseinrichtung insbesondere in dem letzten Volumenelementen des Kompaktierungsbereiches gleichlaufen. Ein zusätzlicher Gasstrom im Formkörper-Auslass kann des Weiteren dazu beitragen, dass Formkörper nach dem Austritt aus dem Reaktor durch die zusätzliche Gaskomponente schneller und einfacher vereinzelt werden können. Ein weiterer Vorteil kann sich dadurch ergeben, dass das Produkt während des gesamten Herstellungsprozesses in einer inerten Atmosphäre vorliegt und inert in ein Lager überführt oder abgepackt werden kann. Die kann die Funktionalität der Beschichtung und der gesamten Formkörper erhöhen.

In einer bevorzugten Charakteristik der Vorrichtung kann ein Verhältnis der mittleren Durchmesser des Mischbereiches und des Kompaktierungsbereiches, berechnet aus dem mittleren Durchmesser des Mischbereiches dividiert durch den mittleren Durchmesser des Kompaktierungsbereiches, größer oder gleich 0,5 und kleiner oder gleich 0,9 betragen. Um eine möglichst gesteuerte Abscheidung der Nanopartikel aus dem Trägergasstrom und eine möglichst reproduzierbare Kompaktierung der Formkörpern zu erreichen hat es sich als besonders vorteilhaft herausgestellt, dass die unterschiedlichen Reaktorbereiche einen unterschiedlichen Durchmesser aufweisen. In diesem Fall kann der Kontaktierungsbereich im Vergleich zum Mischbereich also vorteilhafterweise einen kleineren Durchmesser aufweisen. Innerhalb der oben genannten Relation werden sowohl eine ausreichende Durchmischung unter gleichmäßiger Abscheidung der Nanopartikel als auch eine gleichmäßige mechanische Festigkeit der Formkörper erreicht. In den Fällen, in denen die unterschiedlichen Bereiche selbst variierende Durchmesser aufweisen, wird ein mittlerer Durchmesser des jeweiligen Bereiches bestimmt. Der mittlere Durchmesser ergibt sich als der volumengemittelte Durchmesser des jeweiligen Bereiches. Weist der Kontaktierungsbereich beispielsweise 2 unterschiedliche Durchmesser auf, wobei einer der Durchmesser sich über einem Drittel und der andere Durchmesser sich über zweidrittel des Kompaktierungsbereiches erstreckt, so berechnet sich der mittlere Durchmesser aus dem volumengewichteten Mittelwert 1/3 * Durchmesser 1 + 2/3 * Durchmesser 2.

In einer weiter bevorzugten Ausführungsform der Vorrichtung kann die Kompaktierungsvorrichtung in Form einer Förderschnecke ausgebildet sein. Eine hinreichende und reproduzierbare Kompaktierung der Schüttung kann insbesondere in den Fällen erreicht werden, in denen im Kontaktierungsbereich eine Förderschnecke angeordnet ist. Die Förderschnecke kann die teilkomprimierte Schüttung weiter in Richtung Formkörperauslass transportieren und hinreichende mechanische Kräfte auf die Partikel der Schüttung ausüben, sodass die Partikelschüttung weiter komprimiert und in ihrer Dichte erhöht wird. Durch die Erhöhung der Dichte werden zusammenhängende Aggregate und anschließend die entsprechenden Formkörper ausgebildet. Die Förderschnecke kann zudem das Rückströmen der Schüttung verhindern, welches beispielsweise im Mischbereich unter Verwendung von Blattmischer noch möglich ist.

In einer weiter bevorzugten Ausgestaltung der Vorrichtung kann am Formkörper-Auslass eine Vereinzelungsvorrichtung angeordnet sein. Um eine verbesserte Handhabung der Formkörper zu erreichen, kann sinnvoll sein, dass im oder nach dem Formkörper-Auslass eine Vereinzelungsvorrichtung vorgesehen ist. Diese Vereinzelungsvorrichtung kann beispielsweise in Form eines Abstreifers oder eines rotierenden Schneidmessers ausgestaltet sein, welches die aus dem Formkörper-Auslass austretenden Formkörper in regelmäßigen zeitlichen Abständen durchtrennt und dadurch vereinzelt. Die Formkörper können nach der Vereinzelung beispielsweise ein Volumen von grösser oder gleich 0,1 Kubikzentimeter oder kleiner oder gleich 10 Kubikzentimeter aufweisen.

In einer bevorzugten Ausführungsform der Vorrichtung kann der Trägergas-Einlass in einer axialen Richtung in Richtung des Formkörper-Auslasses versetzt, hinter dem Schüttgut-Einlass erfolgen. Zur möglichst vollständigen Beladung der Schüttung mit Nanopartikeln aus einem Trägergas hatte sich als vorteilhaft herausgestellt, dass der Trägergas-Einlass in axialer Richtung versetzt zum Schüttgut-Einlass erfolgt. Betrachtet man also den Reaktoraufbau vom Reaktorboden zum Reaktorkopf, so erfolgt die Eingabe des Trägergases in den Reaktor erst hinter der Eingabe der Schüttung in den Reaktor. Es ergibt sich somit folgende Reihenfolge Reaktorboden, Schüttgut-Einlass, Trägergas-Einlass, Reaktorkopf. Für diesen Aufbau ergibt sich eine gewisse Einlaufstrecke für die Durchmischung der Schüttung, welche noch nicht direkt mit einem Trägergas-Einlass versehen ist und somit nicht direkt diesen Schüttgutbereich mit Gas versorgt. Trotz der Tatsache, dass man über diese Ausgestaltung ein gewisses Reaktorvolumen nicht direkt mit Trägergas beaufschlagt und somit eher eine weniger effiziente Beladung anzunehmen wäre, kann dieser Aufbau dennoch zu einer deutlich gleichmäßigeren Abscheidung der Nanopartikel aus dem Trägergas auf die Schüttung beitragen. Letzteres ergibt sich beispielsweise durch eine Rückströmung des Gases im Mischbereich auch zu diesen, nicht direkt beaufschlagten Bereichen der Schüttung. Bevorzugt kann der Trägergas-Einlass um mindestens 5%, des Weiteren bevorzugt um mindestens 10%, hinter dem Schüttgut-Einlass erfolgen. Die Prozentangaben beziehen sich auf die gesamte innere, axiale Ausdehnung des Reaktors vom Reaktorboden bis zum Reaktordeckel.

In einer weiterhin bevorzugten Charakteristik der Vorrichtung kann der Trägergas-Einlass nur im Mischbereich angeordnet sein. Zur Erhöhung der Beladungseffizienz hat es sich zudem als vorteilhaft herausgestellt, dass die Eingabe des Trägergases in den Reaktor auf den Teil des Reaktorvolumens beschränkt ist, welcher als Mischbereich fungiert. Es ergibt sich somit innerhalb des Reaktors eine gerichtete Strömung, welche in Kombination mit der oder den Mischblättern für eine gleichmäßige Verteilung des Gases und damit auch der Nanopartikel im gesamten Reaktorvolumen sorgt. Durch die Konvektion der Schüttung wird eine gleichmäßige Abscheidung erreicht, welche in der Abscheidungsdichte zum Reaktorauslass hin ansteigt. Die Nanopartikel werden gleichmäßig und nahezu vollständig aus dem Trägergas abgeschieden, welche die Kosten reduziert und die Prozesszeiten zur Beladung und Kompaktierung verkürzt.

In einer bevorzugten Charakteristik der Vorrichtung kann der Schüttgut-Einlass dazu eingerichtet sein das Schüttgut zeitlich intermittierend in das Reaktorgehäuse einzutragen. Zur Reduzierung eventueller Trägergasverluste und zur Vergleichmäßigung der Beschichtungsergebnisse hat es sich als besonders geeignet herausgestellt, dass die Zuführung an partikulärem Schüttgut nicht kontinuierlich, sondern stoßweise erfolgt. Hierzu kann das Schüttgut in regelmäßigen oder unregelmäßigen Zeitabständen in den Reaktor eingegeben werden. Über diese Form der Eingabe kann zudem die Abscheidungscharakteristik der Nanopartikel und die Verweilzeit des Materials in der Misch- und Kompaktierungszone beeinflusst werden.

In einer weiter bevorzugten Ausführungsform der Vorrichtung kann ein Verhältnis eines axialen Abstandes des Trägergas-Einlasses zu einem Mischblatt, bezogen auf einen Durchmesser der rotierbaren Welle, größer oder gleich 0,1 und kleiner oder gleich 2 betragen. Für eine effiziente und reproduzierbare Beladung der Partikelschüttung mit Nanopartikeln hat es sich als sehr geeignet herausgestellt, dass der Trägergaseinlass in unmittelbarer Nähe zu den Mischblättern erfolgt. Das Trägergas wird also in direkter Nachbarschaft zu den mechanischen Mitteln eingegeben, welche für eine Konvektion der Partikel im Reaktor sorgen. An diesen Stellen erfolgt eine starke Durchmischung und Umwälzung und dies kann zu einer gleichmäßigeren Beladung der gesamten Partikeloberfläche mit Nanopartikeln beitragen. Dieses Verhalten war so nicht erwartbar, da über die hohe Mobilität des Trägergases und damit einer hohen Mobilität der abzuscheidenden Nanopartikel mit einem eher positionsunabhängigen Ergebnis zu rechnen war.

Innerhalb einer bevorzugten Ausführungsform der Vorrichtung kann am Schüttgut-Einlass eine zusätzliche Schnecke umfassend ein oder zwei Windungen angeordnet sein, welches das Totraumvolumen am Einlass reduziert. Des Weiteren kann innerhalb des Mischbereiches ein zu den Mischern gegenläufige Impeller mit mehreren Prallflächen angeordnet sein. Der Impeller kann insbesondere die Rückdurchmischung der Schüttung innerhalb des Reaktors verbessern. Dieser Effekt lässt sich noch dadurch verbessern, indem mehrere Prallflächen am Impeller angeordnet sind, wobei jede zweite Prallfläche als "Rückförderung"-Prallfäche im Vergleich zu den anderen, vorwärts fördernden Impeller-Prallflächen eine kleinere Oberfläche aufweist. Hierdurch wird eine Netto-Vorwärtsförderung des Schüttgutes in Richtung Austritt erreicht, während gleichzeitig eine Optimierung der Durchmischung zur Herstellung eines homogen mit Nanopartikeln beschichteten Schüttguts erfolgt.

Des Weiterhin erfindungsgemäß ist ein Verfahren zur Herstellung nanopartikelbeladener Formkörper, wobei das Verfahren mindestens die Verfahrensschritte umfasst:
i) Bereitstellen eines partikulären Schüttgutes in einer erfindungsgemäßen Vorrichtung;
ii) Leiten eines nanopartikelbeladenen Trägergasstrom durch den Trägergas-Einlass in den Mischbereich der Vorrichtung und durch das bewegte, partikuläre Schüttgut, wobei zumindest ein Teil der Nanopartikel aus dem Trägergasstrom auf der Oberfläche des partikulären Schüttguts abgeschieden wird;
iii) Kompaktieren des zumindest teilweise mit Nanopartikeln beladenen partikulären Schüttgutes im Kompaktierungsbereich der Vorrichtung; und
iv) Austragen des mit Nanopartikeln beladenen, kompaktierten Schüttgutes durch den Formkörper-Auslass.

Die erfindungsgemäße Vorrichtung kann insbesondere zur nanopartikulären Beschichtung und anschließender mechanischen Kompaktierung eines beladenen Schüttgutes verwendet werden. Es lassen sich insbesondere sehr kleine und mechanische instabile Partikel sehr schnell und homogen mit Nanopartikeln versehen und diese anschließend in mechanisch stabilere und größere Formkörper überführen. Zudem können durch die effiziente Ausnutzung des Trägergases auch sehr teure Nanopartikel eingesetzt werden. Für die weiteren Vorteile des erfindungsgemäßen Verfahrens wird explizit auf die für die Vorrichtung genannten Vorteile verwiesen.

Das erfindungsgemäße Verfahren ist ein Verfahren zur Herstellung nanopartikelbeladener Formkörper. Mittels des erfindungsgemäßen Verfahrens können mechanisch stabile Formkörper mit beispielsweise einem Formkörpervolumen in einem Bereich von größer oder gleich 100 µm³ und kleiner oder gleich 50 cm³ bereitgestellt werden. Die Formkörper werden dabei aus einem oberflächlich mit Nanopartikeln beladenen Schüttgut erhalten, welches mechanisch zu den entsprechenden Formkörpern verdichtet und ggf. vereinzelt wurde.

Das Verfahren umfasst den Verfahrensschritt i), das Bereitstellen eines partikulären Schüttgutes in einer erfindungsgemäßen Vorrichtung. Das Bereitstellen des partikulären Schüttgutes kann batchweise, intermittierend oder kontinuierlich erfolgen. Für eine batchweise Bereitstellung wird das unbeladene Schüttgut in den geöffneten Reaktor eingefüllt und dieser anschließend verschlossen. In einer kontinuierlichen Beladung können die Partikel über einen eigenen Schüttgut-Einlass in den Reaktor geladen werden. Ein intermittierendes Einfüllen kann beispielsweise über einen rotierbaren Revolverlader am Einlass erfolgen, welcher einzelne Kammern mit Schüttgut und zwischen diesen einen Abdichtungsbereich aufweist.

Das Verfahren umfasst den Verfahrensschritt ii), dass Leiten eines nanopartikelbeladenen Trägergasstrom durch den Trägergas-Einlass in den Mischbereich der Vorrichtung und durch das bewegte, partikuläre Schüttgut, wobei zumindest ein Teil der Nanopartikel aus dem Trägergasstrom auf der Oberfläche des partikulären Schüttguts abgeschieden wird. Das Trägergas kann durch die rotierbare Welle kontinuierlich oder stoßweise in den Reaktor und durch die Partikelschüttung geführt werden. Für eine effiziente Beladung haben sich Gasdrücke von größer oder gleich 90 kPa (absolut) und kleiner oder gleich 150 kPa (absolut) als besonders effizient herausgestellt. Des Weiteren kann ein Gasfluss von größer oder gleich 0,5 l/min und kleiner oder gleich 5 l/min sowohl eine schnelle Beladung als auch eine möglichst geringe Störung der mechanischen Konvektion bewirken. Diese Gasflüsse können auch durch die kompaktierte Schüttung hindurch aufrechterhalten werden.

Das Verfahren umfasst den Verfahrensschritt iii), dass Kompaktieren des zumindest teilweise mit Nanopartikeln beladenen partikulären Schüttgutes im Kompaktierungsbereich der Vorrichtung. Durch das Kompaktieren des beladenen Schüttgutes wird eine Aggregation der Schüttgutpartikel zu größeren, zusammenhängenden Einheiten erreicht. Diese Aggregation erfolgt durch eine Erhöhung der Dichte der Schüttung innerhalb des Reaktors. Des Weiteren wird für die Vorteile dieses Verfahrensschritts explizit auf die Ausführungen im Rahmen der erfindungsgemäßen Vorrichtung und hier insbesondere auf die Ausführungen zum Kompaktierungsbereich verwiesen.

Das Verfahren umfasst den Verfahrensschritt iv), dass Austragen des mit Nanopartikeln beladenen, kompaktierten Schüttgutes durch den Formkörper-Auslass. Das Entnehmen der beladenen Partikel kann, ebenso wie die Beladung, kontinuierlich oder diskontinuierlich erfolgen. Bevorzugt erfolgt ein kontinuierlicher Austrag des kompaktierten Schüttguts durch den Formkörper-Auslass zur Ausbildung der vereinzelten Formkörper. Die Anzahl oder die Größe des Auslasses kann beispielsweise als Funktion des Durchsatzes gewählt werden. So können beispielsweise je 10 kg/h Durchsatz an Partikelschüttung durch den Reaktor 1- 2 Auslässe in Form runder Durchbrüche durch die Reaktorwand gewählt werden.

In einer weiter bevorzugten Ausgestaltung des Verfahrens kann die Symmetrieachse der Vorrichtung während des Abscheidens einen Winkel von größer oder gleich 70° und kleiner oder gleich 110° bezogen auf die Ausrichtung des Schwerevektors an dieser Stelle einnehmen. Zur Durchführung eines gleichmäßigen und effizienten Beladungs- und Kompaktierungsvorganges hat sich insbesondere eine liegende Ausrichtung der Vorrichtung als besonders geeignet herausgestellt. In dieser Ausrichtung lässt sich das Schüttgut besonders effizient zuführen, es ergibt sich eine gute Durchmischung und Nanopartikelabscheidung und es werden sehr homogene Formkörper mit einer gelichmäßigen Dichte erhalten. Diese Ausrichtung des Reaktors ist im Vergleich zu einer stehenden Ausrichtung, mit paralleler Ausrichtung der Symmetrieachse der Vorrichtung zum Schwerevektor, besser geeignet.

In einer weiter bevorzugten Ausführungsform des Verfahrens können die Mischblätter mit einer Geschwindigkeit von größer oder gleich 0,5 Umdrehungen/Minute und kleiner oder gleich 20 Umdrehungen/Minute betrieben werden. Zur schonenden Umwälzung der partikulären Schüttung im Mischbereich hat sich oben angegebener Bereich an Geschwindigkeiten als besonders geeignet herausgestellt. Bevorzugt kann die Drehzahl der Welle größer oder gleich 1 min⁻¹, und kleiner oder gleich 15 min⁻¹ betragen. Des Weiteren kann in diesem Geschwindigkeitsbereich die Konzentration an Nanopartikeln im Trägergasstrom größer oder gleich 3 µg/L und kleiner odergleich 2 mg/L betragen. Diese Parameterbereiche können einzeln oder als Kombination einzelner Bereiche miteinander vorliegen.

In einer weiter bevorzugten Ausgestaltung des Verfahrens kann ein Dichteunterschied zwischen einer Dichte der kompaktierten Partikelschüttung am Ende des Kompaktierungsbereiches bezogen auf eine Dichte der Partikelschüttung im Mischbereich, berechnet aus der Dichte der kompaktierten Schüttung am Ende des Kompaktierungsbereiches dividiert durch die Dichte der Schüttung im Mischbereich, größer oder gleich 2 und kleiner oder gleich 10 betragen. Durch die mechanische Verfestigung innerhalb des Reaktors lassen sich bevorzugt Formkörper erhalten, welche im Vergleich zur unverdichteten Schüttung eine im oben angegebenen Bereich erhöhte Dichte aufweisen. Innerhalb dieses Bereiches sind die Formkörper ausreichend mechanisch stabil und zeigen zudem noch eine hohe innere Oberfläche. In Kombination mit der Nanopartikelbeladung ergeben sich hoch funktionalisierte Formkörper, welche sich zudem noch einfach einsetzen lassen und nur einen geringen Abrieb zeigen.

Des Weiterhin erfindungsgemäß ist die Verwendung eines erfindungsgemäßen Verfahrens zur Herstellung von mit Nanopartikeln beladener Formkörper. Über das erfindungsgemäße Verfahren unter Verwendung der erfindungsgemäßen Vorrichtung lassen sich auch schwer zu funktionalisierende Partikelschüttungen effizient und schnell mit Nanopartikeln beladen und in mechanisch stabilere Formkörper überführen. Die Partikel können bevorzugt eine Größe im Bereich von 10 µm und 1 cm aufweisen. Bevorzugt können die Partikel eine eher runde Geometrie aufweisen. Weiterhin können die Partikel porös sein. Die Schüttung kann beispielsweise nach der Kompaktierung als pelletiertes Material, aus einem Granulat oder einem Extrudat bestehen. Als Formkörper haben sich eher längliche, "wurmförmige" Formkörper mit einem Durchmesser von 1-3 mm und einer Länge zwischen 2-5 mm als geeignet herausgestellt.

In einer bevorzugten Charakteristik der Verwendung können die Formkörper ausgesucht sind aus der Gruppe bestehend aus Katalysatoren, Düngemitteln, Pflanzenschutzmitteln, Mikronährstoffen, antibakteriell ausgerüsteten Trägern, Sensorpartikeln, hitze- und strahlungsschützenden Werkstoffen, Kosmetikprodukten, Medizinprodukten, Arzneimitteln, Batteriematerialien, Werkstoffen für die additive Fertigung. Es lassen sich über den Einsatz der Beschichtungsapparatur und im Rahmen der Verfahrensdurchführung vielfältige unterschiedliche Beschichtungsaufgaben lösen, in den Partikel mit deutlich kleineren Nanopartikeln auf der Oberfläche weiter funktionalisiert werden. Insbesondere lassen sich über die erfindungsgemäße Herstellung Mikrofabriken zur Herstellung funktioneller Materialien erhalten. Es ist aber beispielsweise auch möglich, für Alkali-Batterien spezifische, weiter funktionalisierte Silizium-/Graphen-/Nanoröhren-Partikel bereitzustellen. Weitere Einsatzgebiete ergeben sich in der Bereitstellung von Katalysatoren generell und insbesondere für die pharmazeutische und elektrochemische Industrie. Ebenso vorteilhaft kann das erfindungsgemäße Verfahren im Bereich der Funktionalisierung von Separatoren oder generell Membranen für Batterien oder Brennstoffzellen sowie zur Herstellung von funktionalisierten Partikeln im Bereich der bildgebenden Diagnostik in der Medizin sein.

Die Katalysatoren können beispielsweise durch ein Abscheiden nanopartikulärer Katalysatorvorläufer auf die Schüttung gebildet werden. Die nanopartikulären Katalysatorvorläufer können als "Rauch" (Feststoff) oder als "Nebel" (Flüssigkeit) im Trägergas dispergiert vorliegen. Die nanopartikulären Katalysatorvorläufer oder generell die Nanopartikel können eine Ausdehnung von kleiner oder gleich 100 nm in mindestens einer der drei räumlichen Dimensionen aufweisen. Des Weiteren können die nanopartikulären Katalysatorvorläufer oder generell die Nanopartikel nicht als Moleküle vorliegen.

### Beispiel

Die Beschichtung und Kompaktierung wird in nur einem Reaktor durchgeführt. Der Reaktor ist aus Edelstahl, Werkstoff-Nr. 1.4401, ausgeführt und weist einen Innendurchmesser von 10 cm mit einer Wandstärke von 1 mm auf. Der Reaktor erstreckt sich auf einer Länge von 15 cm vom Reaktorboden zum Reaktordeckel. Der Durchmesser des Reaktors ist in axialer Richtung nicht konstant. So verjüngt sich der Innendurchmesser des Reaktors auf den letzten 5 cm konisch auf einen Innendurchmesser von 3 cm. In diesem Bereich mit geringerem Innendurchmesser liegt der Kompaktierungsbereich des Reaktors. Die Zuführung der zu beschichtenden Partikelschüttung erfolgt durch eine revolverartige Zuführung. Die Schüttung wird durch einen Schüttgut-Einlass mit einem Innendurchmesser von 0,8 cm und eine Höhe von ca. 2 cm in den Reaktor eingebracht. Die Vorrichtung ist in diesem Beispiel in Bezug auf die Wellenachse liegend angeordnet und die Öffnung des Schüttgut-Einlass befindet sich an der Oberseite der Vorrichtung. Die Eingabe des Schüttgutes erfolgt also nach unten hin. In dieser Richtung ist die Zuführung konisch ausgeführt, wobei der Öffnungswinkel des Einlasses ca. 5° beträgt. In dem Revolver sind 6 Bohrungen ausgeführt, welche eine intermittierende, quasikontinuierliche Zuführung der Schüttung in die Vorrichtung erlauben. Die Revolver-Zuführung wird durch eine Laborette 24 der Fa. Fritsch mit gamma-Al₂O₃ mit einer anzahlgemittelten Korngröße d<75µm befüllt. Die Korngröße der Schüttung kann beispielsweise über Laserlichtstreuung bestimmt werden. Die Partikel fallen aus den Bohrungen der Zuführung durch die Schwerkraft in den Reaktor. Die Zuführung der Schüttung erfolgt in den zylindrisch ausgestalteten Mischbereich des Reaktors.

Die Partikel werden durch die Mischblätter im Mischbereich bewegt und durch den Mischbereich in Richtung des Kompaktierungsbereiches befördert. Dieser ist mit einer Matrize in der verbleibenden Ringöffnung zum Reaktordeckel hin abgeschlossen. Die Befüllung mittels Revolvereinheit ist mit einem Versatz von 2 cm zum Rand des Zylinders angebracht. Die Eingangsseite der Mischkammer ist mit einer durchbrochenen Platte versiegelt, durch die die Hohlwelle dynamisch gedichtet hindurchgeführt wird. Die Trägergas-Zuführung erfolgt durch die Welle der Umwälzvorrichtung, welche als Hohlwelle ausgestaltet ist. Die Zuführung des beladenen Gasstromes in die Hohlwelle erfolgt durch eine handelsübliche Spülbuchse wie sie zur Kühlung mit Luft von Holz- oder Glasbohrern verwendet wird (Spülbuchse MK4 der Firma GDI Diamant-Technik). Die Welle wird durch ein 8 mm-Edelstahl-Rohr mit einem Innendurchmesser von 4 mm gebildet. Die Welle wird durch einen drehzahlgeregelten Antrieb, von IKA-Werke GmbH, Typ RW 20 digital, mit einer maximalen Drehzahl 60 min⁻¹ angetrieben.

Die Welle ist mit Mischblättern in Form von Mischflügeln ausgerüstet, welche mittels eines Konus auf die Welle mechanisch aufgesteckt werden. Der Konus sorgt dafür, dass die eingebrachte Schüttung auf die Mischflügel geleitet wird und von diesen dann durch Verwirbelung durchmischt wird. Es können zwei bis fünf Positionen mit Mischflügeln auf der Welle im Mischbereich realisiert werden. In diesem Beispiel wurden 3 voneinander beabstandete Mischblätter verwendet. Die Mischblätter sind auf Ihren Positionen jeweils um 120° zueinander auf der Hohlwelle in einer Ebene aufgebracht. Die Anstellwinkel der Mischblätter bezogen auf eine Normale sind jeweils um 30° in Richtung der Kompaktierungseinheit versetzt. Die Anstellwinkel der Mischblätter können auch negative Winkel in Bezug auf eine Normale in Richtung der Kompaktierungsschnecke einnehmen, welches die Schüttgutpartikel in Richtung Einlass zurückwird und die Durchmischung erhöht. Negative Anstellwinkel können beispielsweise einen Bereich von -10° bis zu -30° aufweisen. Der Trägergas-Einlass erfolgt über 32 als Durchbrüche der Hohlwelle ausgeführte Düsen. Die Düsen sind jeweils zwischen den Mischblättern im Mischbereich ausgeführt. Die Trägergas-Einlässe sind radial gleichmäßig in den Mantel der Hohlwelle verteilt und weisen jeweils einen Durchmesser von 500 µm auf. Zur Beschichtung der Partikel der Schüttung können beispielsweise Nanopartikel verwendet werden, welche durch eine Funkenentladungsablation unter Verwendung von 95% Ni, 5% Pt Elektroden hergestellt werden. Als Betriebsparameter der Ablation werden eine Spannung von 1,3 kV, ein Strom von 10 mA, mit einer daraus resultierenden Entladungsfrequenz 150 - 200 Hz verwendet. Diese Nanopartikel werden in einem Konzentrationsstrom von 1,6 mg/h in Argon als Trägergas mit einer Strömungsgeschwindigkeit von 3 L/min über die Hohlwelle in den Mischbereich eingebracht. Dies resultiert in einer Nanopartikel-Konzentration von 9 µg Nanopartikel/L Trägergas. Alternativ lassen sich auch durch eine Spray-Pyrolyse hergestellte Nanopartikel verwenden, welche in Stickstoff als Trägergas dispergiert werden. Innerhalb des Mischbereiches werden die bewegten Partikel vom Trägergas umspült und die Nanopartikel auf der Partikeloberfläche der Schüttung gleichmäßig abgeschieden.

An den Mischbereich schließt sich der Kompaktierungsbereich mit einer Spirale an. Die Spirale beginnt 1 cm vor der Verjüngung des Innendurchmessers des Reaktors und weist eine Steigung von 20 mm auf. Der Außendurchmesser der Spirale beträgt 2,9 cm und die Steigung der Spirale wird zum Auslass hin auf 2 mm reduziert. Durch die kontinuierliche Reduzierung der Steigung der Windungen wird das Pulver kompaktiert, durch eine Lochmatrize als Formkörper-Auslass gepresst und danach aufgefangen.

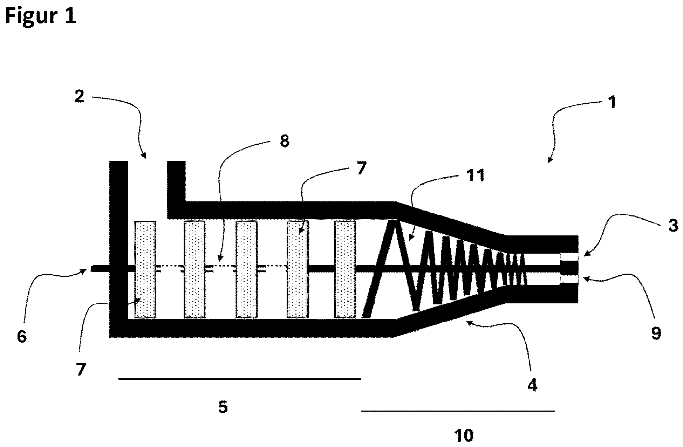

Eine Ausführungsform der vorliegenden Vorrichtung wird noch in exemplarischer Weise mit Bezug auf die Figuren 1 beschrieben:
Figur 1 zeigt schematisch einen Aufbau einer erfindungsgemäßen Vorrichtung.

Die Figur 1 zeigt eine erfindungsgemäße Vorrichtung 1 zur Herstellung kompaktierter, nanopartikelbeladener Formkörper. Die Formkörper werden innerhalb nur eines Reaktorgehäuses 4 aus einem partikulären Schüttgut zweistufig hergestellt. Als funktionale Einheiten umfasst der Reaktor ein zylindrisch ausgestaltetes Reaktorgehäuse 4. Das Reaktorgehäuse 4 weist einen Reaktorboden und einen Reaktordeckel auf. In der Nähe des Reaktorbodens ist der Schüttgut-Einlass 2 angeordnet und im Bereich des Reaktordeckels ist der Formkörper-Auslass 3 angeordnet. Somit liegen der Schüttgut-Einlass 2 und der Formkörper-Auslass 3 jeweils im Bereich der unterschiedlichen axialen Enden des Reaktorgehäuses 4. Innerhalb des Reaktors liegt am Schüttgut-Einlass 2 der Mischbereich 5 vor. Der Mischbereich 5 weist eine sich axial erstreckende Umwälzvorrichtung auf. Die Umwälzvorrichtung wird durch eine rotierbare Welle 6 gebildet, welche an einer oder an mehreren Stellen in unterschiedlichen Höhen an der Welle 6 angeordnete und sich radial von dieser aus erstreckende Mischblätter 7 aufweist. Die Schüttung wird durch die Mischblätter 7 innerhalb des Reaktorgehäuses 4 bewegt und vom Schüttgut-Einlass 2 in Richtung Formkörper-Auslass 3 transportiert. Die Beladung der Schüttung erfolgt durch Aufgabe eines nanopartikelbeladenen Trägergases, welches die Nanopartikel auf die Partikel der Schüttung abscheidet. Das beladene Trägergas wird durch einen Trägergas-Einlass 8 in den Reaktor geleitet, wobei der Trägergas-Einlass 8 in der rotierbaren Welle 6 der Umwälzvorrichtung angeordnet ist. Der Trägergas-Auslass 9 wird in diesem Beispiel durch Formkörper-Auslass 3 realisiert, durch welchen dann sowohl die Formkörper als auch das von Nanopartikeln entreicherte Trägergas geleitet wird. Vor dem Formkörper-Auslass 3 liegt innerhalb des Reaktorgehäuses 4 der Kompaktierungsbereich 10. Im Kompaktierungsbereich 10 verdichtet eine Kompaktierungsvorrichtung 11 das beladene, partikuläre Schüttgut zu den entsprechenden Formkörpern. Die Kompaktierungsvorrichtung 11 kann in Form einer Schnecke angeordnet sein, welche sich mit der Umwälzvorrichtung dieselbe Welle 6 teilt. Über die Kompaktierungseinheit 11 wird die beladenen Partikelschüttung verdichtet und so dessen Dichte erhöht. Die Partikel der Partikelschüttung aggregieren und bilden so die verdichteten Formkörper. Die Formkörper weisen im Vergleich zu dem Schüttgut eine höhere Dichte auf und werden aus aggregierten Schüttgutpartikeln ausgebildet. Die Formkörper werden durch den FormkörperAuslass 3 gepresst und verlassen hier das Reaktorgehäuse 4. Die Formkörper können als solche verwendet und gelagert werden oder aber durch eine Vereinzelungsvorrichtung (in der Figur nicht dargestellt) in noch kleinere Formkörper-Einheiten geschnitten oder vereinzelt werden. Hierzu kann sich beispielsweise ein rotierendes Schneidmesser oder ein rotierender Abstreifer nach dem Formkörper-Auslass 3 anbieten

## Patentansprüche

1. Vorrichtung (1) zur Herstellung kompaktierter, nanopartikelbeladener Formkörper aus einem partikulären Schüttgut, mindestens umfassend:
a) ein zylindrisch ausgestaltetes Reaktorgehäuse (4) mit einem Schüttgut-Einlass (2) und einem Formkörper-Auslass (3), wobei der Schüttgut-Einlass (2) und der Formkörper-Auslass (3) jeweils im Bereich der unterschiedlichen axialen Enden des Reaktorgehäuses (4) angeordnet sind;
b) einen am Schüttgut-Einlass (2) innerhalb des Reaktorgehäuses (4) angeordneten Mischbereich (5) umfassend eine sich axial erstreckende Umwälzvorrichtung, wobei die Umwälzvorrichtung eine rotierbare Welle (6) und ein oder mehrere in unterschiedlichen Höhen an der Welle (6) angeordnete und sich radial von dieser aus erstreckende Mischblätter (7) aufweist;
c) mindestens einen Trägergas-Einlass (8) und einen Trägergas-Auslass (9), wobei der Trägergas-Einlass (8) in der rotierbaren Welle (8) der Umwälzvorrichtung angeordnet ist;
d) einen innerhalb des Reaktorgehäuses (4) und am Formkörper-Auslass (3) angeordneten Kompaktierungsbereich (10), wobei der Kompaktierungsbereich (10) eine Kompaktierungsvorrichtung (11) zur Verdichtung des partikulären Schüttgutes aufweist;
e) mindestens einen Formkörper-Auslass (3).

2. Vorrichtung nach Anspruch 1, wobei der Trägergas-Auslass (9) im Formkörper-Auslass (3) integriert ist und die Vorrichtung keinen weiteren Trägergas-Auslass (9) aufweist.

3. Vorrichtung nach einem der vorhergehenden Ansprüche, wobei ein Verhältnis der mittleren Durchmesser des Mischbereiches (5) und des Kompaktierungsbereiches (10), berechnet aus dem mittleren Durchmesser des Mischbereiches (5) dividiert durch den mittleren Durchmesser des Kompaktierungsbereiches (10), größer oder gleich 0,5 und kleiner oder gleich 0,9 beträgt.

4. Vorrichtung nach einem der vorhergehenden Ansprüche, wobei die Kompaktierungsvorrichtung (11) in Form einer Förderschnecke ausgebildet ist.

5. Vorrichtung nach einem der vorhergehenden Ansprüche, wobei am Formkörper-Auslass (3) eine Vereinzelungsvorrichtung angeordnet ist.

6. Vorrichtung nach einem der vorhergehenden Ansprüche, wobei der Trägergas-Einlass (2) in einer axialen Richtung in Richtung des Formkörper-Auslasses (3) versetzt, hinter dem Schüttgut-Einlass (2) erfolgt.

7. Vorrichtung nach einem der vorhergehenden Ansprüche, wobei der Trägergas-Einlass (8) nur im Mischbereich (5) angeordnet ist.

8. Vorrichtung nach einem der vorhergehenden Ansprüche, wobei der Schüttgut-Einlass (2) dazu eingerichtet ist das Schüttgut zeitlich intermittierend in das Reaktorgehäuse (4) einzutragen.

9. Vorrichtung nach einem der vorhergehenden Ansprüche, wobei ein Verhältnis eines axialen Abstandes des Trägergas-Einlasses (8) zu einem Mischblatt (7), bezogen auf einen Durchmesser der rotierbaren Welle (6), größer oder gleich 0,1 und kleiner oder gleich 2 beträgt.

10. Verfahren zur Herstellung nanopartikelbeladener Formkörper, **dadurch gekennzeichnet, dass** das Verfahren mindestens die Verfahrensschritte umfasst:
i) Bereitstellen eines partikulären Schüttgutes in einer Vorrichtung nach einem der vorhergehenden Ansprüche;
ii) Leiten eines nanopartikelbeladenen Trägergasstrom durch den Trägergas-Einlass (8) in den Mischbereich (5) der Vorrichtung und durch das bewegte, partikuläre Schüttgut, wobei zumindest ein Teil der Nanopartikel aus dem Trägergasstrom auf der Oberfläche des partikulären Schüttguts abgeschieden wird;
iii) Kompaktieren des zumindest teilweise mit Nanopartikeln beladenen partikulären Schüttgutes im Kompaktierungsbereich (10) der Vorrichtung; und
iv) Austragen des mit Nanopartikeln beladenen, kompaktierten Schüttgutes durch den Formkörper-Auslass (3).

11. Verfahren nach Anspruch 10, wobei die Symmetrieachse der Vorrichtung während des Abscheidens einen Winkel von größer oder gleich 70° und kleiner oder gleich 110° bezogen auf die Ausrichtung des Schwerevektors an dieser Stelle einnimmt.

12. Verfahren nach Anspruch 10 oder 11, wobei die Mischblätter (7) mit einer Geschwindigkeit von größer oder gleich 0,5 Umdrehungen/Minute und kleiner oder gleich 20 Umdrehungen/Minute betrieben werden.

13. Verfahren nach einem der Ansprüche 10 bis 12, wobei ein Dichteunterschied zwischen einer Dichte der kompaktierten Partikelschüttung am Ende des Kompaktierungsbereiches (10) bezogen auf eine Dichte der Partikelschüttung im Mischbereich (5), berechnet aus der Dichte der kompaktierten Schüttung am Ende des Kompaktierungsbereiches (10) dividiert durch die Dichte der Schüttung im Mischbereich (5), größer oder gleich 2 und kleiner oder gleich 10 beträgt.

14. Verwendung eines Verfahrens nach einem der Ansprüche 10 bis 13 zur Herstellung von mit Nanopartikeln beladener Formkörper.

15. Verwendung nach Anspruch 14, wobei die Formkörper ausgesucht sind aus der Gruppe bestehend aus Katalysatoren, Düngemitteln, Pflanzenschutzmitteln, Mikronährstoffen, antibakteriell ausgerüsteten Trägern, Sensorpartikeln, hitze- und strahlungsschützenden Werkstoffen, Kosmetikprodukten, Medizinprodukten, Arzneimitteln, Batteriematerialien, Werkstoffen für die additive Fertigung.
